Europäisches Patentamt

European Patent Office

Office européen des brevets

(11) Veröffentlichungsnummer: **0 105 438**
**A2**

(12) **EUROPÄISCHE PATENTANMELDUNG**

(21) Anmeldenummer: **83109562.5**

(22) Anmeldetag: **26.09.83**

(51) Int. Cl.³: **G 06 K 9/62**

(30) Priorität: **30.09.82 DE 3236299**

(43) Veröffentlichungstag der Anmeldung:
**18.04.84 Patentblatt 84/16**

(84) Benannte Vertragsstaaten:
**AT CH DE FR GB IT LI**

(71) Anmelder: **SIEMENS AKTIENGESELLSCHAFT**
**Berlin und München Wittelsbacherplatz 2**
**D-8000 München 2(DE)**

(72) Erfinder: **Höge, Harald, Dr.**
**Haupstrasse 19**
**D-8031 Unterbrunn(DE)**

(54) **Verfahren zum digitalen Korrelieren von Bildpunktfeldern zur Erkennung bildhafter Muster und Schaltungsanordnung zur Durchführung des Verfahrens.**

(57) Zur Berechnung eines Korrelationskoeffizienten werden zeitsparend zumindest Zwischenergebnisse, nämlich Teilsummen, zur Ermittlung des Korrelationskoeffizienten (K) in einem an sich bekannten sog. Pipeline-Berechnungsverfahren mittels eines sog. Pipeline-Prozessors (PP) berechnet, wobei die Abtastzeilen jeweils um einen Bildpunkt gegenüber der vorherigen Zeile versetzt durch i Zeileneinheiten abgearbeitet werden und wobei die i-te Zeileneinheit die betreffenden Teilsummen berechnet, so daß jeweils mit jedem Rechnertakt eine Teilsumme gewonnen wird, während gleichzeitig für jede Abtastzeile jeweils zeitlich um einen Rechnertakt gegenüber der vorhergehenden Abtastzeile versetzt eine Vorverarbeitung der betreffenden Daten vorgenommen wird.

EP 0 105 438 A2

- 1 -

SIEMENS AKTIENGESELLSCHAFT
Berlin und München

Unser Zeichen
VPA 82 P 1 9 2 4 E

Verfahren zum digitalen Korrelieren von Bildpunktfeldern
zur Erkennung bildhafter Muster und Schaltungsanordnung
zur Durchführung des Verfahrens

Die vorliegende Erfindung betrifft ein Verfahren zum digitalen Korrelieren von Bildpunktfeldern zur Erkennung bildhafter Muster und eine Schaltungsanordnung zur Durchführung des Verfahrens.

Im medizinischen, produktiven und im militärischen Bereich werden in zunehmendem Maße Vorrichtungen zur automatischen Erkennung und Verfolgung von Objekten in Bildern eingesetzt. Ist die Anzahl der möglichen Objekte groß und/oder wird eine kurze Erkennungszeit bei hoher Erkennungssicherheit gefordert, so sind die derzeitigen Erkennungsvorrichtungen mit einem hohen apparativen Aufwand verbunden. Die benötigte Hardware erfordert eine hohe Rechenleistung (Operationszeit für einen Bildpunkt im ns-Bereich) und eine hohe Speicherkapazität ($10^5$-$10^8$ bit). Durch den Einsatz und die Weiterentwicklung der VLSI-Technik können sowohl Rechenleistung als auch Speicherkapazitäten auf einem Chip gesteigert werden, wodurch zusammen mit geeigneten Betriebsverfahren bisher nicht realisierbare Analysevorgänge ermöglicht und neue Anwendungsgebiete wirtschaftlich erschlossen werden können.

Die Erkennung von Objekten in Bildern basiert auf den Methoden der Mustererkennung, vergl. beispielsweise H. Niemann: Methoden der Mustererkennung, Akademische Verlagsgesellschaft, Frankfurt am Main. Mit Hilfe eines geeigneten Maßes wird die Ähnlichkeit zwischen einem vorliegenden Bildausschnitt und einem Muster gemessen. Ab Pap 1 Wi - 21.09.1982 einem bestimmten Ähnlichkeitsgrad wird der Bildausschnitt der Klasse der Objekte, zu dem das Vergleichsmuster gehört, zugeordnet, Als ein sehr robustes Ähnlichkeitsmaß hat sich der Korrelationskoeffizient erwiesen, der sich aus den Helligkeitswerten $y_i$ der abgetasteten Bildpunkte des Bildausschnittes und den Helligkeitswerten $x_i$ des Musters nach der Formel

$$K = \frac{\sum (x_i - \bar{x})(y_i - \bar{y})}{\sqrt{\sum (x_i - \bar{x})^2 \sum (y_i - \bar{y})^2}} \qquad \bar{x} = \frac{1}{N} \sum_i x_i \qquad \bar{y} = \frac{1}{N} \sum y_i$$

berechnet. Die hierbei auftretenden Summen von Produkten lassen sich mit CCD-Bausteinen mit hoher Geschwindigkeit berechnen, vergl. beispielsweise M. Bohner, H. Schulz: Einsatz von CCD's zur Musterkennung in der Bildverarbeitung. Eine CCD-Lösung führt jedoch zu einem VLSI-Baustein mit inhomogener und unflexibler Struktur, wodurch hohe Chip-Entwicklungskosten und geringe Adaptionsmöglichkeiten an neue Anforderungen in Kauf genommen werden müssen. Außerdem ist eine Summenbildung mittels CCD-Bausteinen aufgrund der verhältnismäßig geringen Genauigkeit problematisch.

Der vorliegenden Erfindung liegt die Aufgabe zugrunde, ein neuartiges Verfahren zum digitalen Korrelieren von Bildpunktfeldern zur Erkennung bildhafter Muster zu schaffen, durch das der Korrelationskoeffizient K gemäß der eingangs angegebenen Formel in verhältnismäßig kurzer Berechnungszeit, nämlich in weniger als 20 ms, und mit geringer Fehlerrate, nämlich etwa 3%, berechnet werden kann. Aufgabengemäß soll es das neue Verfahren auch ermöglichen, bestimmte Teile eines Musters auszublenden, um so ein teilweise abgedecktes Objekt trotz dieser Abdeckung als solches erkennen zu können. Schließlich besteht die Aufgabe für die Erfindung darin, ein Verfahren der genannten Art zu schaffen, das zu seiner Durchführung eine voll digitale Schaltungsanordnung benötigt, die sich zur vollständigen Integration auf einem VLSI-Baustein eignet, womit der apparative Aufwand wesentlich zu verringern ist.

Die der Erfindung zugrundeliegende Aufgabe wird durch ein
Verfahren zum digitalen Korrelieren von Bildpunktfeldern
nach dem Oberbegriff des Patentanspruchs 1 gelöst, das
durch die in dessen kennzeichnenden Teil angegebenen
Merkmale gekennzeichnet ist.

Vorteilhafte Weiterbildungen der Erfindung sich durch
die in den Unteransprüchen angegebenen Merkmale gekennzeichnet.

Im folgenden wird die Erfindung anhand mehrerer, den
Stand der Technik bzw. Ausführungsbeispiele für die vorliegende Erfindung betreffender Figuren im einzelnen erläutert.

Fig. 1 zeigt schematisch eine Anordnung nach dem Stand
der Technik zur Bestimmung eines Korrelationskoeffizienten K mittels eines Korrelationsbausteins KB,
dem Bildpunktsignale eines Muster M und eines Bildausschnitts B des zu analysierenden Bildes zugeführt werden.

Fig. 2 zeigt ein Flußdiagramm zur Berechnung des Korrelationskoeffizienten.

Fig. 3 zeigt schematisch das grundsätzliche Prinzip des
erfindungsgemäßen Verfahrens zum digitalen Korrelieren von Bildpunktfeldern, bei dem mit verschobenen Lagen von Bildausschnitten operiert wird.

Fig. 4 zeigt schematisch ein Bildanalysesystem bestehend
aus einem Bildausgabe-Prozessor BP, einem Korre-

0105438

lationsbaustein KB mit einem "Pipeline"-Prozessor PP und einem "Nano"-Prozessor NP, sowie einem "Host"-Prozessor HP.

Fig. 5 zeigt ein Blockschaltbild für eine Schaltungsanordnung zur Durchführung des erfindungsgemäßen Verfahrens, wobei diese Schaltungsanordnung den "Pipeline"-Prozessor PP in Fig. 4 bildet.

Fig. 6 zeigt ein Blockschaltbild des schaltungstechnischen Aufbaus wesentlicher Bausteine des "Pipeline"-Prozessors PP in Fig. 5, nämlich der Bausteine ALU1...24 (Arithmetic Logic Unit).

Fig. 7 zeigt ein Blockschaltbild der Gesamtstruktur des auf einem Korrelations-Chip in VLSI-Technik vollständig integrierbaren Korrelationsbausteins KB in Fig. 4.

Fig. 8 zeigt ein Blockschaltbild der Struktur des Bildausgabe-Prozessors BP in Fig. 4.

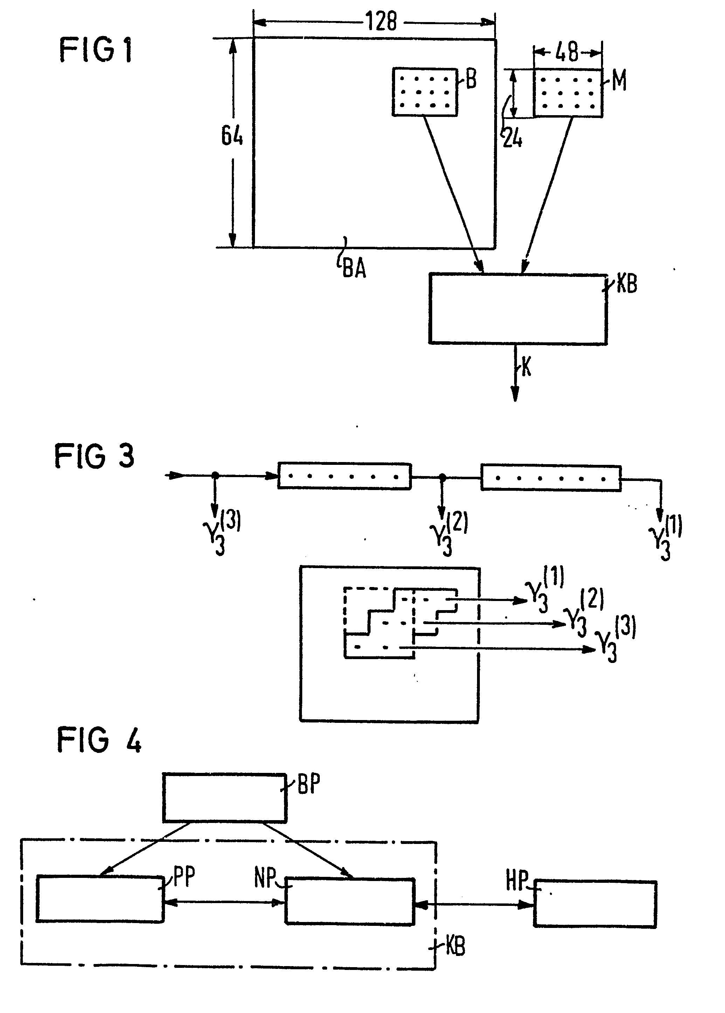

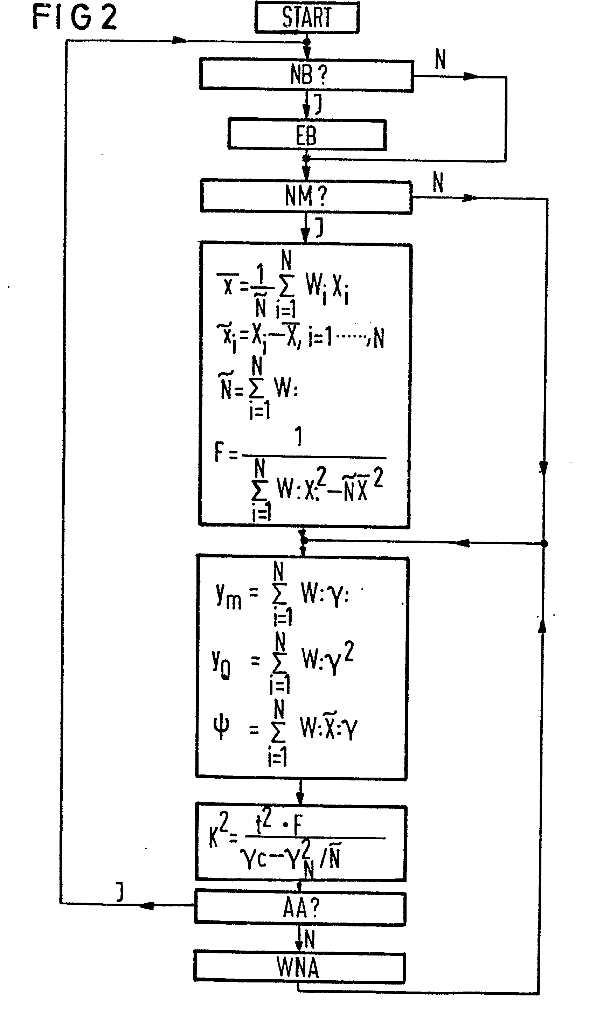

Wie bereits erwähnt, zeigt Fig. 1 schematisch eine Anordnung nach dem Stand der Technik zur Bestimmung eines Korrelationskoeffizienten K mittels eines Korrelationsbausteins KB, dem Bildpunktsignale eines Musters M und eines Bildausschnitts B des zu analysierenden Bildes zugeführt werden.

Eine derartige Anordnung enthält einen Datenspeicher, in dem die Bildpunkte zumindest eines Musters M gespeichert sind (beispielsweise auf dem Gebiet der medizinischen Diagnostik das typische Erscheinungsbild einer bestimmten Tumorart oder beispielsweise auf dem Gebiet der Daktylc - kopie das Bild eines bestimmten Fingerabdrucks u. a. m., eine Bildabtasteinrichtung zum Abtasten von Bildausschnitten B einer zu analysierenden Bildvorlage BA und einen Korrelationsbaustein KB, der den Korrelationskoeffizienten K berechnet. Die Bildabtasteinrichtung (in Fig. 1 nicht gezeigt) tastet "rollend" die gesamte Bildvorlage BA, die vorzugsweise in Bildpunktfelder zu 64 x 128 Bildpunkten unterteilt ist, mit einem Bildausschnittfenster, das eine Fläche hat, die gleich der Fläche des Musters M ist und vorzugsweise 24 x 48 Bildpunkte aufweist, ab. Der Korrelationsbaustein KB empfängt die entsprechenden Abtastsignale und korreliert diese mit den ihm ebenfalls aus dem das Muster M enthaltenden Speicher (in Fig. 1 nicht gezeigt) zugeführten Muster-Bildpunkt-Signalen.

Der Korrelationsbaustein KB berechnet aus den ihm zugeführten Daten den Korrelationskoeffizienten K.

Der ermittelte Wert des Korrelationskoeffizienten bildet ein Maß für die Ähnlichkeit des Musters zum Bildausschnitt. Durch Schieben des Musters über das gesamte zu analysierende Bild gibt der Korrelationskoeffizient darüber Auskunft, ob das Muster in dem Bild überhaupt vorhanden ist (Mustererkennung) oder ob sich ein schon erkanntes Muster in zeitlich hintereinander aufgenommenen Bildern in eine bestimmte Richtung bewegt hat (tracking).

Der Korrelationskoeffizient läßt sich nach der Formel

$$K = \frac{\sum_{i=1}^{N} w_i \, \tilde{x}_i \, y_i}{\sqrt{\left(\sum_{i=1}^{N} w_i x_i^2 - N \bar{x}^2\right)} \sqrt{\sum_{i=1}^{N} w_i y_i^2 - N\bar{y}^2}} \qquad (1)$$

$$\bar{x} = \frac{1}{\tilde{N}} \sum_{i=1}^{N} w_i x_i \;, \quad \bar{y} = \frac{1}{\tilde{N}} \sum_{i=1}^{N} w_i y_i \;, \quad N = \sum_{i=1}^{N} w_i \;, \quad X_i = x_i - \bar{x}$$

$$w_i \in \{0,1\}$$

berechnen, wobei $x_i$ die Bildpunkte des Musters und $y_i$ die

Bildpunkte des Bildausschnittes bedeuten. Die Werte $w_i$ bilden eine Wichtungsfunktion mit dem Wert 0 oder 1. Damit können den Erkennungsprozeß störende Bildpunkte ausgeblendet werden ($w_i$ = 0). Der Funktionsablauf zur Berechnung des Korrelationskoeffizienten ist in Fig. 2 zu sehen. Es wird davon ausgegangen, daß die Bildpunkte in einem Bildspeicher stehen, der bei jedem neuen Bild neu gefüllt wird. Liegt ein neues Muster vor, so müssen zunächst die Werte $\bar{x}$, $\tilde{x}_i$, F berechnet werden. Danach werden für jeden Bildausschnitt die Werte $y_m$, $y_Q$, $\gamma$ und $K^2$ bestimmt. Diese Schleife wird so oft durchlaufen, bis alle Ausschnitte des Bildes in dem Bildspeicher abgearbeitet sind. Abweichend von (1) wird nicht K, sondern dessen Quadrat berechnet. Der Grund liegt in einer einfacheren Hardware-Realisierung, da hierbei die Operation Wurzelziehen entfällt. Da $K^2$ eine monotone Funktion von K ist, eignet sich $K^2$ ebenso zur Bildanalyse.

Der Aufwand zur Berechnung des Korrelationskoeffizienten hängt im wesentlichen von der Größe des Bildes, der Größe des Musters, der digitalen Auflösung der Bildpunkte, der Genauigkeitsanforderung an den Korrelationskoeffizienten und der Analysezeit für die Abarbeitung eines Bildes ab. Richtwerte der Anforderungen an den VLSI-Baustein sind nachstehender Aufstellung zu entnehmen:

| | |
|---|---|
| Anzahl der Bildpunkte des zu analysierenden Bildes: | 64 x 128 = 8192 |
| Anzahl der Musterbildpunkte: $N \leq$ | 24 x 48 = 1152 |
| Auflösung der Bildpunkte: | 5 bit |
| relative Genauigkeit des Korrelationskoeffizienten: | $\Delta K$ = 3 % |
| Analysezeit: | T = 20 ms |

Die größte Rechenleistung wird nach Fig. 2 bei der Ermittlung der Größen $y_m$, $y_Q$, $\gamma$ benötigt. Bei diesen Operationen

müssen 3 Summen mit jeweils N (N = 1152) Summanden verarbeitet werden. Da es minimal (128-48) x (64-24) = 3200 Bildausschnitte gibt und diese in 20 ms abgearbeitet werden müssen, ergibt sich bei serieller Arbeitsweise eine minimale Operationszeit $T_o$ für die Berechnung und Aufsummierung eines Summanden von

$$T_o \leq \frac{20}{3} \cdot \frac{10^6}{3200 \cdot 1152} \approx 2 \text{ns} \qquad (2)$$

Die Zeit zur Berechnung eines Korrelationskoeffizienten K beträgt

$$T_K \leq \frac{20}{3200} \cdot 10^3 \approx 6 \text{ usec} \qquad (3)$$

und ist somit um Größenordnungen größer als $T_o$ (siehe Gl. (2)).

Bei der Betrachtung des Hardware-Aufwandes muß zur Rechenzeit die Komplexität und die Rechengenauigkeit der durchzuführenden Operationen betrachtet werden. Auf Grund der geringen Bitbreite von 5 Bit pro Bildpunkt und der Homogenität der Operationen erfordern die zur Berechnung der Summanden von $y_m$, $y_Q$, (siehe Fig. 2) benötigten Produkte $w_i y_i$, $w_i y^2$, $w_i x_i y_i$ eine geringe Komplexität. Auf Grund einer Analyse der geforderten Genauigkeit von 3 % des Korrelationskoeffizienten müssen die zur Bestimmung der Größen F, $K^2$ benötigten Multiplikationen und Divisionen mit einer Bitbreite von ca. 16 Bit durchgeführt werden. Zusätzlich sind die Operationen in ihrer Struktur inhomogen, so daß für diesen Teil der Berechnung des Korrelationskoeffizienten eine hohe Komplexität erforderlich ist.

In Fig. 2, die wie bereits erläutert, ein Flußdiagramm

0105438

zur Berechnung des Korrelationskoeffizienten zeigt, bedeuten:"NB?"="Neues Bild einlesen?", "EB"="Bild einlesen", "NM"="Neues Muster?", "AA?"="Alle Ausschnitte abgearbeitet?" und "WNA"="Nächsten Ausschnitt wählen".

Aufgrund der zwei Anforderungen an die Hardware - hohe Rechengeschwindigkeit bei niedriger Komplexität und geringer Rechengeschwindigkeit bei hoher Komplexität - bietet sich zur Realisierung ein Zwei-Prozessor-System an (siehe Fig. 4). Der Pipeline-Prozessor PP berechnet die Größen $y_m$, $y_Q$, $\gamma$. Er arbeitet nach dem sog. Pipeline-Prinzip.

Der Nano-Prozessor NP, dessen Grundstruktur an den im Institut von Prof. Schüssler/Erlangen entwickelten Nano-Prozessor angelehnt ist, übernimmt die Berechnung der restlichen Größen. Er übernimmt auch alle Steueraufgaben, die zur Synchronisation mit den verschiedenen Prozessoren nötig sind. Der Bildausgabe-Prozessor BP liefert die benötigten Bildpunkte eines Bildausschnittes, ein Host-Prozessor HP sendet die Musterbildpunkte und empfängt den Wert des Korrelationskoeffizienten und dessen Position in dem zu analysierenden Bild.

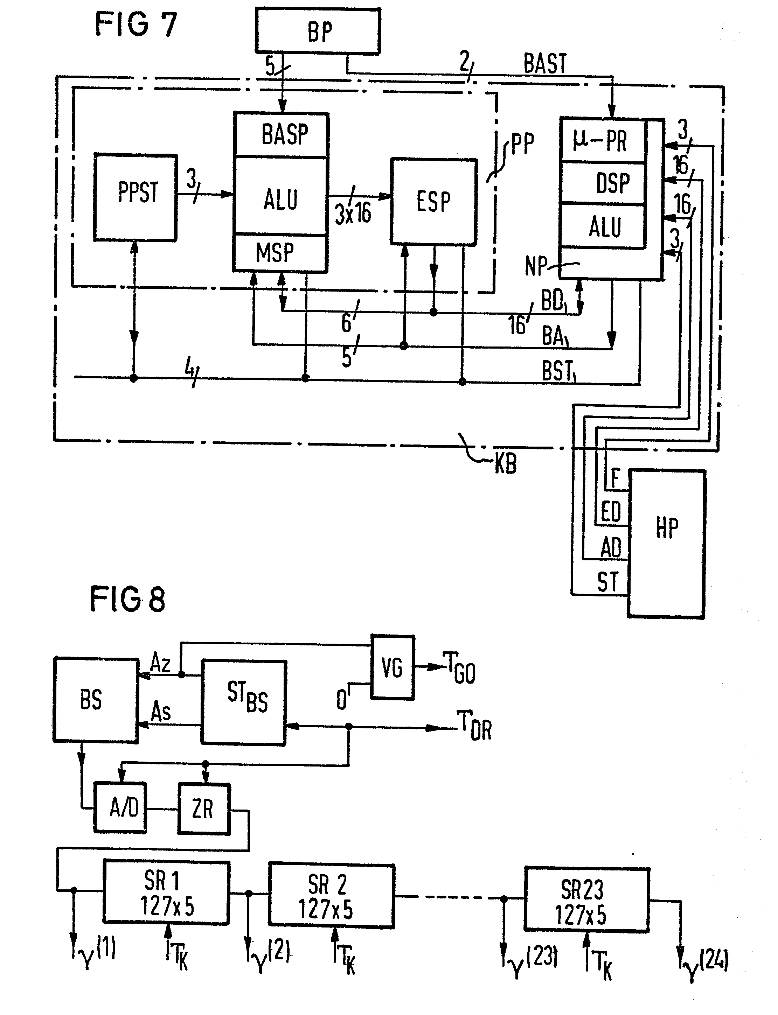

Einen genaueren Aufbau des Korrelationsbausteins zeigt Fig. 7. Der Nano-Prozessor NP ist $\mu$-programmierbar ($\mu$-PR), wodurch sich eine flexible Steuerung ergibt. Über Funktionsbefehle (siehe nachstehende Aufstellung) stößt der Host-Prozessor HP das jeweils auszuführende Programm an. Der Datentransfer zwischen Host- und Nano-Prozessor erfolgt über verschiedene Leitungen, und zwar über eine Funktionsleitung F, eine Dateneingabeleitung ED, eine Datenausgabeleitung AD und Steuerungsleitungen.

-9- VPA 82 P 1924 E

## Funktionsbefehle von Host - an Nano - Prozessor 0. Rücksetzen des Nano-Prozessors
1. Eingabe neues Muster
2. Übernahme eines Musters aus dem letzten Bildausschnitt ('alte Maske, neue Maske, keine Maske)
3. Ausgabe von Korrelationskoeffizienten
4. Ausgabe von Korrelationskoeffizienten
5. Ausgabe des größten Korrelationskoeffizienten
6. Ausgabe eines Bildausschnittes

Über einen Datenbus $B_D$ leitet der Nano-Prozessor NP die Musterbildpunkte in einen Muster-Speicher MSP des Pipeline-Prozessors PP. Zur Normierung können diese Daten vom Nano-Prozessor NP wieder gelesen, modifiziert und zu-rückgeschrieben werden. Die Werte $y_m$, $y_Q$, $\Upsilon$ legt der Pipe-line-Prozessor PP in seinen Ergebnisspeicher ESP ab. Dort können sie von dem Nano-Prozessor NP zur Weiterverarbeitung abgerufen werden. Die Synchronisation zwischen dem Nano-Prozessor NP und den anderen Prozessoren erfolgt über Steuersignale, die er selbst erzeugt oder auf die er wartet (siehe nachstehende Aufstellungen).

## Steuersignale zwischen Host- und Nano-Prozessor

1. "Go": Anstoß vom Host-Prozessor zum Abarbei-ten des Steuerbefehls
2. "done": Rückmeldung des Nano-Prozessors an den Host-Prozessor nach Beendigung des Steuerbefehls
3. "data ready": Daten können vom Nano-Prozessor abge-holt werden.

## Steuersignale von der Bildausgabe zum Nano-Prozessor

1. "Go": Start Bildeingabe
2. "data ready": ein neuer Bildpunkt (neue Bildaus-schnittpunkte) können in den Bildaus-

gabe-Prozessor geladen werden.

Steuersignale zwischen Nano- und Pipeline-Prozessor

1. "Go":        Starte Berechnung von $y_m$, $y_Q$, $\psi$
2. "Done":      Rückmeldung von Pipeline-Prozessor bei Beendigung der Berechnung
3. Transferrichtung: Eingabe oder Ausgabe eines Datenwortes
4. Transferimpuls:  Transferausführung
5. Datenaustausch zwischen Bildausschnittsspeicher und Musterspeicher

Die verschiedenen Bausteine sind außerdem über einen Adreßbus $B_A$ sowie einen Steuerungsbus $B_{ST}$ miteinander verbunden. Der Nano-Prozessor NP enthält im übrigen neben der Recheneinheit ALU noch einen Datenspeicher DSP. Der Recheneinheit ALU des Pipeline-Prozessors PP ist neben dem Musterspeicher MSP noch ein Bildausschnittsspeicher BASP zugeordnet. Die Bildausgabesteuerung erfolgt über eine Leitung BAST. Die Steuerung des Pipeline-Prozessors PP wird durch eine Pipeline-Prozessor-Steuerung PPST durchgeführt.

Die Aufgabe des Pipeline-Prozessors PP, dem Daten $D_{BAP}$ aus dem Bildausgabe-Prozessor zugeführt werden und der von dem Bildausgabe-Prozessor gesteuert wird ($ST_{BAP}$), liegt darin, die Summen $y_Q$, $y_m\psi$ zu berechnen. Bei serieller Arbeitsweise ergeben sich nach Formel (2) Operationszeiten von 2 ns, die mit der auch in einigen Jahren verfügbaren VLSI-Technik nicht realisierbar sind. Als Alternative bieten sich Strukturen mit mehreren, parallel arbeitenden Rechenwerken an.

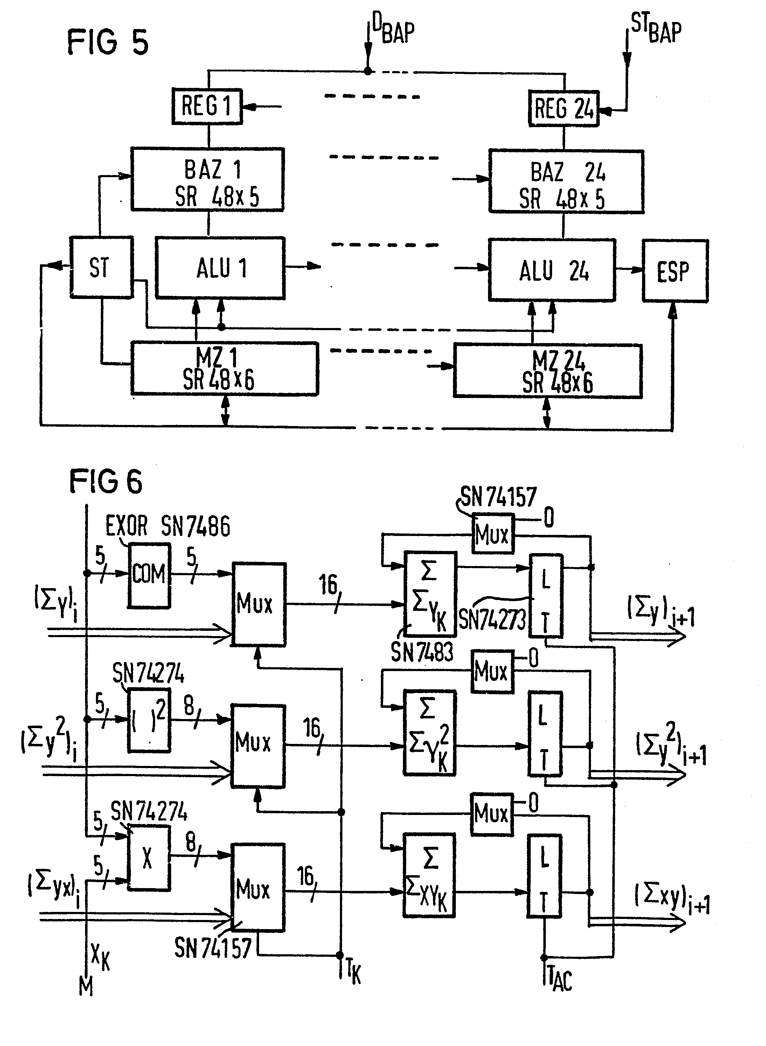

Einen Vorschlag dazu bildet der in Fig. 5 gezeigte Pipeline-Prozessor, der einen Kompromiß zwischen Hardware-Umfang und Rechengeschwindigkeit bildet. Der Pipeline-Prozessor besitzt 24 Recheneinheiten (ALU 1 bis ALU 24) mit zugehörigen Schieberegistern SR, welche jeweils eine Musterzeile MZ bzw. Bildausschnittzeile BAZ beinhalten (Zeileneinheit). Die i-te Zeileneinheit berechnet die Teilsummen

$$y_m^{(i)} \leftarrow y_m^{(i-1)} \ , \qquad y_m^{(i)} \leftarrow y_m^{(i)} \ + \ w_k y_k \ ; \ k = 1, \ \ldots \ 48,$$

$$y_Q^{(i)} \leftarrow y_Q^{(i-1)} \ , \qquad y_Q^{(i)} \leftarrow y_Q^{(i)} \ + \ w_k y_k y_k \ ; k = 1, \ \ldots, 48,$$

$$\gamma^{(i)} \leftarrow \gamma^{(i-1)} \ , \quad \gamma^{(i)} \leftarrow \gamma^{(i)} \ + \ w_k y_k \cdot x_k; \ k = 1, \ldots 48,$$

wobei im 1. Takt die Ergebnisse $y_m^{(i-1)}$, $y_Q^{(i-1)}$, $\gamma_Q^{(i-1)}$ der vorherigen Zeileneinheit i-1 und in den Takten 2 bis 49 die entsprechenden Summanden einer Zeile hinzuaddiert werden. Mit $y_m^{(o)} = y_Q^{(o)} = \gamma^{(0)} = 0$ für die erste Zeileneinheit ergeben sich dann am Ausgang der 24-ten Zeileneinheit im 49-ten Takt die gewünschten Größen $y_m$, $y_Q$, $\gamma$. Im ersten Takt wird gleichzeitig in jedes Schieberegister, die eine Bildausschnittzeile enthält, ein neuer Bildpunkt eingespeichert, wodurch sich der Bildausschnitt um eine Spalte nach rechts verschiebt.

Hierbei muß jedoch die zeitliche Verschiebung des Entstehungszeitpunktes der Teilsummen durch eine örtliche Verschiebung der Bildausschnittzeilen ausgeglichen werden. Beispielhaft ist in Fig. 3 die örtliche Lage eines 3x3 Punkte umfassenden Bildausschnittes (festumrandeter Teil) während der Berechnung einer Teilsumme gezeigt.

Hierbei werden die Summen $y_m^{(i)}$, $y_Q^{(i)}$, $\gamma^{(i)}$ aus den festumrandeten Bildpunkten des Ausschnittes gebildet. Die dritte Zeileneinheit hat nach dem 4-ten Takt die Größen $y_m$, $y_Q$, $\gamma$, die zu dem gestrichelten Bildausschnitt gehören, berechnet.

Durch das kontinuierliche Einlesen sämtlicher Bildpunkte in die Bildschieberegister entstehen in den Ausschnittszeilenregister "unechte" Zeilen, wenn sich ein Bildpunkt einer Bildausschnittszeile von einer Zeile zur nächsten über den Bildrand bewegt. Die hierbei entstehenden Summen $y_m$, $y_Q$, $\gamma$ sind nicht zu verwerten. Ihr Ausblenden kann durch den Nano-Prozessor erfolgen, indem er die Adressen der Bildpunkte mitverarbeitet.

Verbunden mit dem kontinuierlichen Schieben der Bildausschnitte über den Bildrand hinweg ist eine erhöhte Anzahl der zu berechnenden Summen. Insgesamt sind minimal 128x (64-23) = 5248 Korrelationswerte zu berechnen, wodurch sich die in nachstehender Aufstellung eingetragenen Rechenzeiten ergeben.

Rechenzeiten des Pipeline-Prozessors

Analysezeit T = 20 ms
Dauer einer Korrelation = 20   $10^3$/5248 = 3,8 usec
Taktzeit für eine Zeileneinheit = 3,8 . $10^3$/49 = 77 ns

Nach Abschätzungen sind mit einer 1-µ-N-MOS-Technologie Taktzeiten von ca. 50 ns möglich, so daß der Pipelineprozessor als VLSI-Baustein im Hinblick auf die Taktgeschwindigkeiten realisierbar ist. In einer Bildpunkt-Recheneinheit (siehe Fig. 6) werden die Bildpunkte $x_k$, $y_k$ zu Summanden verknüpft, die in einem Addierer mit Akkumulator aufaddiert werden. Die Ausblendung von Summanden ($w_k = 0$) erfolgt durch das 6-te Bit des Musterbildpunktes, welcher den Takt $T_{AC}$ des Akkumulators bei $w_k = 0$ unterdrückt.

Die Aufgabe des Bildausgabe-Prozessors besteht in der digitalen Ausgabe des Wertes der Helligkeit eines von einem Bildsensor aufgenommenen Bildpunktes und in der Ausgabe von Steuersignalen, welche den Nano-Prozessor über den Zeitpunkt des Bildanfangs (z. B. linker oberer Eckpunkt) und den Zeitpunkt der Ausgabe eines Bildpunktes informiert. Eine mögliche Struktur des Bildausgabe-Prozessors ist in Fig. 8 dargestellt. Über eine Zeilen- und Spalteninformation steuert eine Bildsensorsteuerung $ST_{BS}$ den Bildsensor BS, der einen Bildpunkt an einen A/D-Wandler A/D und dann an ein Zwischenregister ZR übergibt. An dem darauffolgenden Bildschieberegister SR1 bis SR23 liegen die für die Zeileneinheiten benötigten Bildpunkte der verschiedenen Zeilen. Mit dem Signal $T_{GO}$ wird dem Nano-Prozessor der Start eines neuen Bildes, mit dem Signal $T_{DR}$ die Ausgabe eines Bildpunktes signalisiert. Mit VG ist ein Verriegelungsglied bezeichnet.

Die Aufgabe des Nano-Prozessors besteht
- in der Berechnung des Korrelationskoeffizienten aus den Teilsummen $y_m$, $y_Q$,
- in dem Austausch der Daten zwischen sich und dem Host- und dem Pipeline-Prozessor
- und in der Steuerung und Synchronisation der peripheren und internen Signale des Korrelationsbausteines.

Der Anforderung "Vielfältige Steueraufgaben bei hoher Rechenleistung" genügt eine mikroprogrammierbare Struktur.

Ein Mikroprogramm besteht aus einer frei programmierbaren Folge von Datenworten (Mikro-Worte gespeichert in einem ROM oder RAM), welche die Steuerung des Prozessors übernehmen. Die einzelnen binären Stellen des Mikrowortes steuern direkt die Einheiten des Prozessors (Multiplexer MUX, Funktion der ALU etc.). Mit wachsender Anzahl der Funktionen des Prozessors, die gleichzeitig über das Mikrowort gesteuert werden müssen, wächst die Bitbreite des Mikrowortes.

Die Rechen- und Steuereinheit des Nano-Prozessors besteht aus einer ALU, welche die Operationen Multiplikation, Division und Subtraktion ausführen kann, einem Speicher, in welchen Zwischenergebnisse, Daten vom oder zum Host-Prozessor und Korrelationskoeffizienten mit deren Bildlageadressen gespeichert werden können und zwei Adreßakkumulatoren, die Adressen hochzählen und in die Adressen eingespeichert werden können. Die Daten des Host-Prozessors werden über ein Input- und Outputregister transferiert. Mit dieser Struktur können in einem Programmschritt in der ALU arithmetische Operationen durchgeführt, in den Adressakkumulatoren neue Adressen berechnet und Daten auf den verschiedenen Datenwegen transferiert werden.

Der Kern der Steuereinheit des Nano-Prozessors bildet ein Mikroprogrammspeicher, der durch einen Mikroprogrammakkumulator adressiert wird. In jedem Programmzyklus wird das Mikroprogrammregister mit einem neuen Mikrowort geladen, welches die verschiedenen Steueroperationen auslöst. Der Mikroprogrammakkumulator ist ladbar, wodurch Programmsprünge ermöglicht werden. Sprungadressen sind z. B. von dem Host-Prozessor ausgegebenen Funktionsadressen. Der Zeitpunkt des Sprunges wird von Steuersignalen der Bildausgabe, des Host-Prozessors und des Nano-Prozessors bestimmt.

5 Patentansprüche
8 Figuren

Patentansprüche:

1. Verfahren zum digitalen Korrelieren von Bildpunktfeldern zur Erkennung bildhafter Muster, wobei als Ähnlichkeitsmaß ein Korrelationskoeffizient nach der Formel

$$K = \frac{\sum(x_i - \bar{x})(y_i - \bar{y})}{\sqrt{\sum(x_i - \bar{x})^2}\sqrt{\sum(y_i - \bar{y})^2}} \qquad \bar{x} = \frac{1}{N}\sum x_i \qquad \bar{y} = \frac{1}{N}\sum y_i$$

benutzt wird, in welcher Formel $y_i$ Helligkeitswerte der abgetasteten Bildpunkte einer Bildvorlage und $x_i$ Helligkeitswerte der abgetasteten Bildpunkte eines Musters darstellen, wobei eine Bildabtasteinrichtung die gesamte Bildvorlage "rollend" mit einem Bildausschnittsfenster, das eine Fläche hat, die gleich der Fläche des Musters ist, abtastet, wobei die entsprechenden Abtastsignale einem Korrelationsbaustein zugeführt werden und wobei dieser Korrelationsbaustein die Abtastsignale mit den ihm ebenfalls zugeführten Muster-Bildpunktsignalen korreliert, um den Korrelationskoeffizienten zu berechnen, d a - d u r c h   g e k e n n z e i c h n e t , daß zumindest Zwischenergebnisse, nämlich Teilsummen, zur Ermittlung des Korrelationskoeffizienten (K) in einem an sich bekannten sog. Pipeline-Berechnungsverfahren mittels eines sog. Pipeline-Prozessors (PP) berechnet werden, wobei die Abtastzeilen jeweils um einen Bildpunkt gegenüber der vorherigen Zeile versetzt durch i Zeileneinheiten abgearbeitet werden und wobei die i-te Zeileneinheit die betreffenden Teilsummen berechnet, so daß jeweils mit jedem Rechnertakt eine Teilsumme gewonnen wird, während gleichzeitig für jede Abtastzeile jeweils zeitlich und einen Rechnertakt gegenüber der vorhergehenden Abtastzeile versetzt - eine Vorverarbeitung der betreffenden Daten vorgenommen wird.

2. Verfahren nach Anspruch 1, d a d u r c h  g e -
k e n n z e i c h n e t ,  daß jeweils mit einem Rechnertakt in jeder Abtastzeile ein neues Bildpunktsignal
in ein der Abtastzeile individuell zugeordnetes Schieberegister und das an vorderster Stelle der Bildpunktsignalschlange stehende Bildpunktsignal aus diesem Schieberegister herausgeschoben wird, so daß sich der Signalinhalt des einer Musterzeile (MZ) in der Länge oder Bildpunktanzahl entsprechenden Schieberegisters um eine Spalte der Bildvorlage verschiebt.

3. Verfahren nach Anspruch 1 oder 2, d a d u r c h
g e k e n n z e i c h n e t ,  daß durch das kontinuierliche Einlesen sämtlicher Bildpunkte in die Schieberegister in Ausschnittszeilenregistern entstehende "unechte"
Zeilen, die sich dann ergeben, wenn sich ein Bildpunkt
einer Bildausschnittszeile von einer Zeile zur nächsten
über den Bildrand hinweg bewegt, mittels eines
"Nano"-Prozessors (NP) durch Mitverarbeiten der Adressen
der Bildpunkte ausgeblendet werden.

4. Schaltungsanordnung zur Durchführung des Verfahrens
nach einem der Ansprüche 1 - 3, d a d u r c h  g e -
k e n n z e i c h n e t ,  daß Korrelationsbaustein (KB)
vorgesehen ist, der ein Zwei-Prozessorsystem, bestehend
aus dem Pipeline-Prozessor (PP) und dem Nano-Prozessor
(NP), enthält, daß ein Bildausgabe-Prozessor (BP) vorgesehen ist, der Signale sowohl an den Pipeline-Prozessor
(PP) als auch an den Nano-Prozessor (NP) liefert, daß
ein Host-Prozessor (HP) vorgesehen ist, der Steuer- und Kontrollfunktionen für den Korrelationsbaustein (KB) ausführt, und daß der Pipeline-Prozessor (PP) und der Nano-
Prozessor (NP) über Busleitungen miteinander verbunden
sind, über die wechselseitig Daten zwischen diesen beiden
Prozessoren auszutauschen sind.

5. Schaltungsanordnung nach Anspruch 4, d a d u r c h
g e k e n n z e i c h n e t ,  daß der Pipeline-Prozessor

0105438
82 P 1 9 2 4 E

(PP) eine Anzahl, vorzugsweise 24 Recheneinheiten (ALU1 ...ALU24) mit jeweils individuell zugeordneten Schieberegistern (SR), Eingangsregister (REG1...REG24), einen Ergebnisspeicher (ESP) und eine Pipeline-Prozessor-Steuerung (PPST) aufweist.

0105438

1/4

FIG 1

FIG 3

FIG 4

FIG 2

0105438

START

NB ?  →  N

EB

NM ?  →  N

$$\overline{X} = \frac{1}{\widetilde{N}} \sum_{i=1}^{N} W_i X_i$$

$$\widetilde{x}_i = X_i - \overline{X}, \; i = 1 \cdots\cdots, N$$

$$\widetilde{N} = \sum_{i=1}^{N} W_i$$

$$F = \cfrac{1}{\sum_{i=1}^{N} W_i X_i^2 - \widetilde{N} \overline{X}^2}$$

$$y_m = \sum_{i=1}^{N} W_i \gamma_i$$

$$y_0 = \sum_{i=1}^{N} W_i \gamma^2$$

$$\Psi = \sum_{i=1}^{N} W_i \widetilde{X}_i \gamma$$

$$K^2 = \cfrac{t^2 \cdot F}{\gamma c - \gamma_N^2 / \widetilde{N}}$$

J ←  AA ?

↓ N

WNA

3/4

FIG 5

FIG 6

FIG 7

FIG 8